# EUROPEAN PATENT APPLICATION

(11) **EP 3 813 287 A1**
(43) Date of publication of application: **28.04.2021**
(21) Application number: 18923296.0
(22) Date of filing: 21.06.2018
(51) Int. Cl.: H04L 5/00, H04W 24/00

(54) **WIRELESS LINK MONITORING METHOD, TERMINAL DEVICE, AND NETWORK DEVICE**

(71) Applicant: GUANGDONG OPPO MOBILE TELECOMMUNICATIONS CORP., LTD., Dongguan Guangdong 523860 (CN)
(72) Inventor: XU, Weijie, Dongguan, Guangdong 523860 (CN)
(74) Representative: Novagraaf Technologies
(86) International application number: PCT/CN2018/092256
(87) International publication number: WO 2019/241975

(57) **Abstract**

Disclosed is a wireless link monitoring method, a terminal device, and a network device, capable of increasing the accuracy of link monitoring in an unlicensed frequency band. The method comprises: a terminal device, on the basis of channel quality of the terminal device, selecting a target RLM parameter set from a first RLM parameter set and a second RLM parameter set; and the terminal device performing RLM according to the target RLM parameter set.

## Description

### TECHNICAL FIELD

The embodiments of the present application relate to the field of communications, and more particularly, to a method for Radio Link Monitoring (RLM), a terminal device, and a network device.

### BACKGROUND

In the New Radio (NR) system (or called 5G system, 5G network), data transmission on unlicensed frequency bands is supported. When communication devices communicate on the unlicensed frequency bands, they need to follow the principle of Listen Before Talk (LBT). For example, before the base station sends a signal to the terminal device on the unlicensed spectrum channel, it needs to perform channel detection first, and only when the channel detection result is idle, it can send the signal; and if the result of performing channel detection on the unlicensed spectrum by the base station is that the channel is busy, the signal cannot be sent.

The terminal device may receive a reference signal sent by the base station on the unlicensed spectrum for radio link monitoring. When the quality of the reference signal measured by the terminal device is poor, the terminal device cannot know whether this is caused by the base station being unable to send the reference signal because the channel is busy, or the channel quality of the terminal device is poor. In this case, the RLM measurement result based on the reference signal cannot accurately determine the actual channel condition.

### SUMMARY

The embodiments of the present application provide a method for radio link monitoring, a terminal device, and a network device, which can improve the accuracy of radio link monitoring on an unlicensed frequency band.

In a first aspect, there is provided a method for radio link monitoring, including: selecting, by a terminal device, a target RLM parameter set from a first RLM parameter set and a second RLM parameter set based on a channel quality of the terminal device; and performing, by the terminal device, the RLM according to the target RLM parameter set

In a second aspect, there is provided a method for radio link monitoring, including: determining, by a network device, configuration information, wherein the configuration information comprises a first RLM parameter set and a second RLM parameter set, and the first RLM parameter set and the second RLM parameter set are used by a terminal device for selecting a target RLM parameter set used for performing the RLM according to a channel quality of the terminal device; and sending, by the network device, the configuration information to the terminal device

In a third aspect, there is provided a terminal device, and the terminal device may execute the method in the foregoing first aspect or any optional implementation of the first aspect. Specifically, the terminal device may include a functional module for executing the foregoing first aspect or any possible implementation of the first aspect.

In a fourth aspect, there is provided a terminal device, and the terminal device may execute the method in the foregoing second aspect or any optional implementation manner of the second aspect. Specifically, the terminal device may include a functional module for executing the foregoing second aspect or any possible implementation manner of the second aspect.

In a fifth aspect, there is provided a terminal device, including: a processor and a memory. The memory is configured to store a computer program, and the processor is configured to call and run the computer program stored in the memory to execute the method in the above-mentioned first aspect or any possible implementation of the first aspect.

In a sixth aspect, there is provided a network device, including: a processor and a memory. The memory is configured to store a computer program, and the processor is configured to call and run the computer program stored in the memory to execute the method in the above-mentioned second aspect or any possible implementation of the second aspect.

In a seventh aspect, a chip is provided for implementing the method in the foregoing first aspect or any possible implementation of the first aspect. Specifically, the chip includes a processor, configured to call and run a computer program from a memory, so that a device installed with the chip executes the method in the first aspect or any possible implementation of the first aspect.

In an eighth aspect, a chip is provided to implement the method in the foregoing second aspect or any possible implementation of the second aspect. Specifically, the chip includes a processor, configured to call and run a computer program from a memory, so that a device installed with the chip executes the method in the second aspect or any possible implementation of the second aspect.

In a ninth aspect, a computer-readable storage medium is provided for storing a computer program that enables a computer to execute the method in the above-mentioned first aspect or any possible implementation of the first aspect.

In a tenth aspect, a computer-readable storage medium is provided for storing a computer program that enables a computer to execute the method in the above-mentioned second aspect or any possible implementation of the second aspect.

In an eleventh aspect, a computer program product is provided, including computer program instructions that cause a computer to execute the method in the foregoing first aspect or any possible implementation of the first aspect.

In a twelfth aspect, a computer program product is provided, including computer program instructions that cause a computer to execute the method in the foregoing second aspect or any possible implementation of the second aspect.

In a thirteenth aspect, a computer program is provided, which when running on a computer, causes the computer to execute the method in the above-mentioned first aspect or any possible implementation of the first aspect.

In a fourteenth aspect, a computer program is provided, which when running on a computer, causes the computer to execute the method in the above-mentioned second aspect or any possible implementation of the second aspect.

Through the above technical solution, the terminal device selects the target RLM parameter set for radio link monitoring from different RLM parameter sets based on its channel quality, so as to perform the radio link monitoring based on individual parameters in the target RLM parameter set, thereby improving the accuracy of RLM measurements on the unlicensed frequency bands.

### BRIEF DESCRIPTION OF THE DRAWINGS

Fig. 1 is a schematic diagram of a possible wireless communication system applied by an embodiment of the present application.
Fig. 2 is a schematic flowchart of a method for radio link monitoring according to an embodiment of the present application.
Fig. 3 is a schematic flowchart of a method for radio link monitoring according to another embodiment of the present application.
Fig. 4 is a schematic block diagram of a terminal device according to an embodiment of the present application.
Fig. 5 is a schematic block diagram of a network device according to an embodiment of the present application.
Fig. 6 is a schematic structural diagram of a communication device according to an embodiment of the present application.
Fig. 7 is a schematic structural diagram of a chip of an embodiment of the present application.
Fig. 8 is a schematic block diagram of a communication system according to an embodiment of the present application.

### DETAILED DESCRIPTION

The technical solutions in the embodiments of the present application will be described below in conjunction with the drawings in the embodiments of the present application. Obviously, the described embodiments are part of the embodiments of the present application, not all of the embodiments. Based on the embodiments in this application, all other embodiments obtained by those of ordinary skill in the art without creative work shall fall within the protection scope of this application.

The technical solutions of the embodiments of the present application can be applied to various communication systems, such as: Global System of Mobile communication (GSM) system, Code Division Multiple Access (CDMA) system, and Wideband Code Division Multiple Access (WCDMA) system, General Packet Radio Service (GPRS), Long Term Evolution (LTE) system, LTE Frequency Division Duplex (FDD) system, LTE Time Division Duplex (TDD) system, Advanced long term evolution (LTE-A) system, New Radio (NR) system, evolution system of NR system, LTE-based access to unlicensed spectrum (LTE-U) system, NR-based access to unlicensed spectrum (NR-U) system, Universal Mobile Telecommunication System (UMTS), Worldwide Interoperability for Microwave Access (WiMAX) communication system, Wireless Local Area Networks (WLAN), Wireless Fidelity (WiFi), next-generation communication systems or other communication systems, etc.

Generally speaking, traditional communication systems support a limited number of connections and the connections are easy to be implemented. However, with the development of communication technology, mobile communication systems will not only support traditional communication, but also support, for example, Device to Device (D2D) communication, Machine to Machine (M2M) communication, Machine Type Communication (MTC), and Vehicle to Vehicle (V2V) communication, etc. The embodiments of this application can also be applied to these communications systems.

Optionally, the communication system in the embodiments of the present application can be applied to a Carrier Aggregation (CA) scenario, can also be applied to a Dual Connectivity (DC) scenario, and can also be applied to a Standalone (SA) network layout scenario.

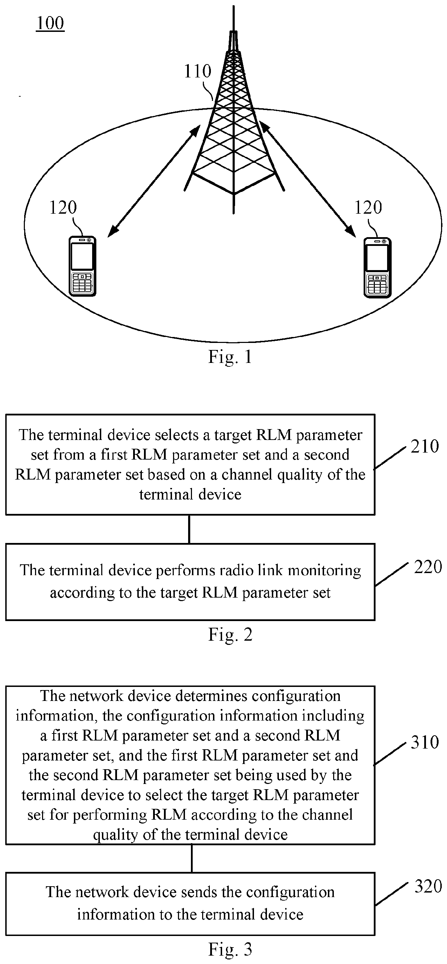

Exemplarily, the communication system 100 applied in the embodiments of the present application is shown in Fig. 1. The wireless communication system 100 may include a network device 110. The network device 110 may be a device that communicates with a terminal device. The network device 110 may provide communication coverage for a specific geographic area, and may communicate with the terminal device located in the coverage area. Optionally, the network device 100 may be a base station (Base Transceiver Station, BTS) in the GSM system or the CDMA system, or a base station (NodeB, NB) in the WCDMA system, or an Evolutional Node B (eNB or eNodeB) in the LTE system, or the network side device in the NR system, or the wireless controller in the Cloud Radio Access Network (CRAN), or the network device may be a relay station or an access point, an in-vehicle device, a wearable device, a network-side device in a next-generation network, or a network device in the future evolution of the Public Land Mobile Network (PLMN), etc.

The wireless communication system 100 further includes at least one terminal device 120 located within the coverage area of the network device 110. As used herein, the "terminal device" includes, but is not limited to, connection via wired lines, such as via Public Switched Telephone Networks (PSTN), Digital Subscriber Line (DSL), digital cables, and direct cable connections; and/or another data connection/network; and/or via a wireless interface, such as for cellular networks, Wireless Local Area Network (WLAN), digital TV networks such as DVB-H networks, satellite networks, AM-FM broadcast transmitter; and/or an apparatus of another terminal device that is set to receive/send communication signals; and/or Internet of Things (IoT) equipment. The terminal device set to communicate through a wireless interface may be referred to as a "wireless communication terminal", a "wireless terminal" or a "mobile terminal".

The terminal device 120 may be mobile or fixed. Optionally, the terminal device 120 may refer to an access terminal, User Equipment (UE), a user unit, a user station, a mobile station, a mobile station, a remote station, a remote terminal, a mobile device, a user terminal, a terminal, a wireless communication device, a user agent or a user apparatus. The access terminal may be a cellular phone, a cordless phone, a Session Initiation Protocol (SIP) phone, a Wireless Local Loop (WLL) station, a Personal Digital Assistant (PDA), handheld devices and computing devices with wireless communication function or other processing devices connected to wireless modems, in-vehicle devices, wearable devices, terminal devices in the future 5G network or terminal devices in the future evolved PLMN, etc. Optionally, Device to Device (D2D) communication may also be performed between the terminal devices 120.

Specifically, the network device 110 may provide services for a cell, and the terminal device 120 communicates with the network device 110 through transmission resources (for example, frequency domain resources, or spectrum resources) used by the cell. The cell may be a cell corresponding to the network device 110 (for example, a base station). The cell may belong to a macro base station or a base station corresponding to a Small cell. The Small cell here may include: Metro cell, Micro cell, Pico cell, Femto cell, etc. These Small cells have the characteristics of small coverage and low transmit power, and are suitable for providing high-rate data transmission services.

Fig. 1 exemplarily shows one network device and two terminal devices. Optionally, the wireless communication system 100 may include multiple network devices and the coverage of each network device may include other numbers of terminal devices, which is not limited by the embodiments of the present application.

Optionally, the wireless communication system 100 may also include other network entities such as a network controller and a mobility management entity, which are not limited in the embodiments of the present application.

At present, the target scenarios in the NR system on the unlicensed spectrum (NR-U) include SA scenario and DC scenario, and RLM operations need to be performed on an unlicensed frequency band. Before the network device sends a signal on the unlicensed frequency band, it needs to perform channel listening to determine whether the channel is idle, and only when it is determined that the channel is idle, the device network can send the signal. Therefore, when the network device sends the reference signal for radio link monitoring (RLM-RS) to the terminal device, the RLM-RS may not be sent due to the busy channel, thereby affecting the terminal device to perform the radio link monitoring.

In the existing mechanism, when the terminal device performs measurement based on RLM-RS and obtains a Signal to Interference plus Noise Ratio (SINR), when the SINR is higher than a synchronization threshold Qin, the terminal device reports synchronization (in sync, IS) indication; and when the measured SINR is lower than an out-of-sync threshold Qout, the terminal device reports an out of sync (OOS) indication.

However, in the unlicensed frequency band, when the SINR measured by the terminal device is very low, the terminal device cannot know whether this is caused by the network device being unable to send RLM-RS because the channel is busy, or caused by that the channel quality of the terminal device is poor. If the channel is temporarily busy when the network device is sending RLM-RS and the RLM-RS cannot be sent, but in fact, once the channel is idle, the channel quality is still good, in this case, the terminal will unable to determine the current actual channel condition based on the RLM-RS measurement result.

Therefore, the embodiments of the present application propose that different RLM parameter sets are configured for different channel qualities, so that the terminal devices with different channel qualities use different RLM parameter sets to perform the radio link monitoring, so as to improve accuracy of radio link monitoring on the unlicensed frequency band.

The reference signal RLM-RS used for the terminal device to perform the radio link monitoring in the embodiments of the present application may include, for example, a Channel State Information Reference Signal (CSI-RS) or a Synchronization Signal Block (SSB or SS Block), or other reference signals.

Fig. 2 is a schematic flowchart of a method 200 for radio link monitoring according to an embodiment of the present application. The method described in Fig. 2 may be executed by a terminal device, and the terminal device may be, for example, the terminal device 120 shown in Fig. 1. As shown in Fig. 2, the method 200 for radio link monitoring may include some or all of the following steps.

In 210, the terminal device selects a target RLM parameter set from a first RLM parameter set and a second RLM parameter set based on a channel quality of the terminal device.

In 220, the terminal device performs radio link monitoring according to the target RLM parameter set.

Optionally, the first RLM parameter set includes at least one of the following parameters: an evaluation period of RLM, a synchronization threshold Qin used to determine whether to report an in sync (IS) indication, an out-of-synchronization threshold Qout used to determine whether to report an out of sync (OOS) indication, a counter N310 for recording a number of the OOS indications that are continuously reported to determine whether to start a timer T310, and a counter N311 for recording a number of the IS indications that are continuously reported to determine whether to stop the timer T310 before the timer T310 expires.

Optionally, the second RLM parameter set includes at least one of the following parameters: an evaluation period of RLM, a synchronization threshold Qin used to determine whether to report an in sync (IS) indication, an out-of-synchronization threshold Qout used to determine whether to report an out of sync (OOS) indication, a counter N310 for recording a number of the OOS indications that are continuously reported to determine whether to start a timer T310, and a counter N311 for recording a number of the IS indications that are continuously reported to determine whether to stop the timer T310 before the timer T310 expires.

At least one of the parameters included in the first RLM parameter set is different from the parameters included in the second RLM parameter set.

In the embodiments of the present application, the set value of the counter N310 may be recorded as N310, and the set value of the counter N311 may be recorded as N311.

The timer T310 is used for the terminal device to determine whether a link connection fails (Radio Link Failure, RLF). When the higher layer of the terminal device receives continuous N310 OOS indications sent by the physical layer, it can start the timer T310. Before the timer T310 expires, if the higher layer of the terminal device receives continuous N311 IS indications sent by the physical layer, the timer T310 can be stopped. The evaluation period of the RLM is a period during which radio link monitoring is performed to determine whether to report an IS indication or an OOS indication. For example, the terminal device measures SINR according to the period and compares the measurement result with Qin or Qout to determine whether to report an OOS indication or an IS indication.

For the cell for radio link monitoring, if the measured value of the signal quality of the terminal device is higher than the synchronization threshold Qin, the physical layer of the terminal device may report the in sync (IS) indication to the higher layer; conversely, if the measured value of the signal quality of the terminal device is lower than the out-of-sync threshold Qout, the physical layer of the terminal device reports an out of sync (OOS) indication to the higher layer. If the higher layer of the terminal device receives N310 consecutive OOS indications from the physical layer (it is assumed that other timers such as timer T311 are not running, and this embodiment only considers RLM under the timer T310 mechanism), then the timer T310 is started. When the higher layer of the terminal device receives consecutive N311 IS indications from the physical layer and the timer T310 is running (that is, the timer T310 has not expired), the timer T310 is stopped. If the higher layer of the terminal device does not receive consecutive N311 IS indications before the timer T310 expires, the terminal device considers it as RLF.

It should be understood that the embodiments of this application do not limit the names of the synchronization threshold Qin, the out-of-synchronization threshold Qout, the timer T310, the counter N310, and the counter N311. The parameters with other names that can realize the functions of the above parameters should also fall within the protection scope of the embodiments of the present application.

It can be seen that in the unlicensed frequency band, even if the channel quality of the terminal device is good, the network device may be unable to send the RLM-RS because the channel is busy when sending the RLM-RS. In this case, the quality of the reference signal obtained by consecutive measurements by the terminal device may be lower than the out-of-synchronization threshold Qout, and timer T310 is started. After that, for the same reason, the terminal device may not receive consecutive N311 IS indications after the timer T310 is started, and the timer T310 is terminated, and finally the RLF is misjudged.

In the embodiments of this application, when the terminal device performs radio link monitoring, it will select the RLM parameter set suitable for itself from the first RLM parameter set and the second RLM parameter set according to the quality of its own channel as the target RLM parameter set to be used, so as to avoid the misjudgment of RLF caused by the failure to send RLM-RS successfully because the channel is busy.

It should be understood that the embodiments of the present application only take the first RLM parameter set and the second RLM parameter set as examples for description, but are not limited thereto. For example, multiple RLM parameter sets can also be configured to correspond to multiple channel quality levels. The terminal device may select the RLM parameter set corresponding to the signal quality level according to the measured channel quality, and perform the radio link monitoring according to the selected RLM parameter set.

Optionally, in 210, the terminal device selects the target RLM parameter set from the first RLM parameter set and the second RLM parameter set according to the channel quality of the terminal device, including: if the measured value of the channel quality of the terminal device is greater than or equal to a first threshold, the terminal device selects the first RLM parameter set as the target RLM parameter set; and/or, if the measured value of the channel quality of the terminal device is less than or equal to the first threshold, the terminal device selects the second RLM parameter set as the target RLM parameter set.

Optionally, the set value of the counter N310 in the first RLM parameter set is greater than the set value of the counter N310 in the second RLM parameter set; and/or, the set value of the counter N311 in the first RLM parameter set is less than the set value of the counter N311 in the second RLM parameter set; and/or the duration of the timer T310 in the first RLM parameter set is greater than the duration of the timer T310 in the first RLM parameter set.

The measured value of the channel quality of the terminal device may include, for example, any one of the following: Reference Signal Receiving Power (RSRP), Reference Signal Received Quality (RSRQ), or Reference Signal SINR (RS-SINR).

For example, taking the SINR as an example, for a terminal device with a relatively good channel quality, that is, a terminal device with an SINR greater than the first threshold, the parameters in the first RLM parameter set may be used for radio link monitoring. The set value of the counter N310 in the first RLM parameter set may be configured to be greater than the set value of the counter N310 in the second RLM parameter set, so that the timer T310 is not easy to start, and the timer T310 starts only when multiple OOS indications are received continuously; and/or, the set value of the counter N311 in the first RLM parameter set may be configured to be smaller than the set value of the counter N311 in the second RLM parameter set, so that the terminal T310 may be terminated once a fewer number of IS indications are received continuously; and/or, the duration of the timer T310 in the first RLM parameter set may be configured to be greater than the duration of the timer T310 in the second RLM parameter set, so that the timer T310 needs a long time to time out, thereby improving the possibility of continuously receiving N311 IS indications to terminate the timer T310, thus reducing the possibility of RLF misjudgment by the terminal device with good channel quality.

Conversely, for the terminal device with poor channel quality, that is, the terminal device with an SINR less than the first threshold, parameters in the second RLM parameter set may be used for radio link monitoring. The set value of the counter N310 in the second RLM parameter set may be configured to be smaller than the set value of the counter N310 in the first RLM parameter set, so that the timer T310 is easy to start; and/or, the set value of the counter N311 in the second RLM parameter set may be configured to be greater than the set value of the counter N311 in the first RLM parameter set, so that it is difficult to terminate the timer T310 after being started; and/or the duration of the timer T310 in the second RLM parameter set may be configured to be less than the duration of the timer T310 in the first RLM parameter set, so that the timer T310 is easier to time out after being started. Compared with the first RLM parameter set, these parameters in the second RLM parameter set are relatively easy to trigger RLF when the first SINR measured by the terminal device is relatively small. This setting makes the influence of the parameter set used by the terminal device for radio link monitoring on the detection result to be basically consistent with the actual channel quality.

In addition, optionally, with respect to the radio link monitoring performed by the terminal device on the licensed frequency band, considering the negative impact caused by the busy channel, the selection of the second RLM parameter set may make it difficult for the terminal device to judge the RLF. For example, with respect to the aforementioned parameters used by the terminal device for radio link monitoring on the licensed frequency band, the second RLM parameter set may be configured with a larger N310, and/or a smaller N311, and/or a larger duration of T310.

The above-mentioned measured values of channel quality include but are not limited to RSRP, RSRQ, RS-SINR, etc., for example, the measured value of the channel quality of the terminal device may also be a Received Signal Strength Indication (RSSI), and these measured values may directly or indirectly characterize the channel quality of the terminal device.

It should be understood that whether the terminal device selects the first RLM parameter set or the second RLM parameter set as the target RLM parameter set to be used is based on the channel quality of the terminal device. When the channel quality of the terminal device is good, the first RLM parameter set is selected; and when the channel quality of the terminal device is poor, the second RLM parameter set is selected.

For example, when the terminal device selects the RLM parameter set based on the measurement values of RSRP, RSRQ, RS-SINR, etc., the larger the measurement value is, the better the channel quality is. Therefore, when the measurement value is greater than the first threshold, the RLM parameter set with a larger set value of the counter N310, and/or a smaller set value of the counter N311, and/or a longer duration of the timer T310 may be selected as the target parameter set. The smaller the measurement value is, the worse the channel quality is. Therefore, when the measurement value is less than the first threshold, the RLM parameter set with a smaller set value of the counter N310, and/or a larger set value of the counter N311, and/or a shorter duration of the timer T310 may be selected as the target parameter set.

When the terminal device selects the RLMRLM parameter set based on RSSI, etc., the smaller the measured value is, the better the channel quality is. Therefore, when the measured value is less than the first threshold, the RLM parameter set with a larger set value of the counter N310, and/or smaller set value of the counter N311 and/or a longer duration of the timer T310 may be selected as the target parameter set. The larger the measurement value is, the worse the channel quality is. Therefore, when the measurement value is greater than the first threshold, the RLM parameter set with a smaller set value of the counter N310, and/or a larger set value of the counter N311, and/or a smaller duration of the timer T310 may be selected as the target parameter set.

Optionally, the measured value of the channel quality of the terminal device includes an average value of multiple measured values of the channel quality of the terminal device obtained by the terminal device in a predetermined period of time.

Taking SINR as an example, for a terminal with better channel quality, the channel measurement may be based on the measurement of the RLM-RS to obtain the SINR, or the SINR may be obtained based on the measurement of other reference signals. If the SINR measured by the terminal is greater than the first threshold (for example, 10 dB), it indicates that the channel quality of the terminal device is good. The SINR may be the average value of the SINR measurement results in a period of time, for example, the average value of the SINR measurement results in a period of time before the time of the current radio link monitoring, and as time goes by, the terminal device may update the SINR in real time based on the latest measurement result.

Optionally, before 210, the method further includes: the terminal device obtaining configuration information for radio link monitoring. The configuration information may include at least one of the first threshold, the first RLM parameter set, and the second RLM parameter set.

Further, optionally, the terminal device obtaining the configuration information used for radio link monitoring includes: the terminal device receiving the configuration information sent by the network device, for example, receiving the configuration information sent by the network device through a Wireless Resource Control (RRC) signaling; or, the terminal device obtaining the configuration information pre-stored in the terminal device, for example, the configuration information may be agreed upon by a protocol.

Optionally, in 220, the terminal device performs the RLM according to the target RLM parameter set, including: the terminal device performing SINR measurement; if the measured value of the SINR is greater than the synchronization threshold Qin, the physical layer of the terminal device reporting the IS indication to the higher layer of the terminal device; and if the measured value of the SINR is less than the out-of-synchronization threshold Qout, the physical layer of the terminal device reporting the OOS indication to the higher layer of the terminal device.

Optionally, in 220, the terminal device performing the RLM according to the target RLM parameter set further includes: if the number of the OOS indications continuously received by the higher layer of the terminal device from the physical layer of the terminal device reaches the set value of the timer N310, the higher layer of the terminal device starting the timer T310; if the number of IS indications continuously received by the higher layer of the terminal device from the physical layer of the terminal device reaches the set value of the timer N311 before the timer T310 expires, the higher layer of the terminal device stopping the timer T310; and if the number of the IS indications continuously received from the physical layer of the terminal device by the higher layer of the terminal device does not reach the set value of the timer N311 before the timer T310 expires, the terminal device determining RLF.

Fig. 3 is a schematic flowchart of a method 300 for radio link monitoring according to an embodiment of the present application. The method described in Fig. 3 may be executed by a network device, and the network device may be, for example, the network device 110 shown in Fig. 1. As shown in Fig. 3, the method for radio link monitoring 300 may include some or all of the following steps.

In 310, the network device determines configuration information.

In 320, the network device sends the configuration information to the terminal device.

Optionally, the configuration information includes a first RLM parameter set and a second RLM parameter set, and the first RLM parameter set and the second RLM parameter set are used by the terminal device to select the target RLM parameter set for performing RLM according to the channel quality of the terminal device.

Optionally, the configuration information further includes a first threshold, and the first threshold is used by the terminal device to select the first RLM parameter set as the target parameter when the measured value of the channel quality of the terminal device is greater than or equal to the first threshold, and/or select the first RLM parameter set as the target parameter set when the measured value of the channel quality of the terminal device is less than or equal to the first threshold.

Optionally, the set value of the counter N310 in the first RLM parameter set is greater than the set value of the counter N310 in the second RLM parameter set; and/or, the set value of the counter N311 in the first RLM parameter set is less than the set value of the counter N311 in the second RLM parameter set; and/or, the duration of the timer T310 in the first RLM parameter set is greater than the duration of the timer T310 in the first RLM parameter set.

Optionally, the first RLM parameter set and the second RLM parameter set include at least one of the following parameters, and at least one of the parameters included in the first RLM parameter set is different from the parameters included in the second RLM parameter set: an evaluation period of RLM, a synchronization threshold Qin used to determine whether to report an in sync (IS) indication, an out-of-synchronization threshold Qout used to determine whether to report an out of sync (OOS) indication, a counter N310 for recording a number of the OOS indications that are continuously reported to determine whether to start a timer T310, and a counter N311 for recording a number of the IS indications that are continuously reported to determine whether to stop the timer T310 before the timer T310 expires.

Therefore, the network device configures two sets of RLM parameter sets for the terminal device, so that the terminal device can select the target RLM parameter set for radio link monitoring from the first RLM parameter set and the second RLM parameter set based on its channel quality, and then perform the radio link monitoring based on individual parameters in the target RLM parameter set, thereby improving the accuracy of RLM measurement on the unlicensed frequency band.

It should be understood that the first threshold and these two parameter sets may both be configured by the network device for the terminal device; or, the two parameter sets may be configured by the network device for the terminal device and the first threshold is pre-stored in the terminal device; or, the first threshold is configured by the network device for the terminal device and the two parameter sets are pre-stored in the terminal device, which is not limited by the embodiments of this application.

It should also be understood that the specific operation of the network device in the radio link monitoring process can refer to the related description of the terminal device in the foregoing Fig. 2, and for the sake of brevity, it will not be repeated here.

It should be noted that, under the premise of no conflict, the various embodiments described in this application and/or the technical features in each embodiment can be combined with each other arbitrarily, and the technical solutions obtained after the combination should also fall within the protection scope of this application..

It should be understood that in the various embodiments of the present application, the size of the sequence numbers of the foregoing processes does not mean the order of execution. The execution order of each process should be determined by its function and internal logic, and the sequence numbers of the foregoing processes should not constitute any limitation to the embodiments of the present application.

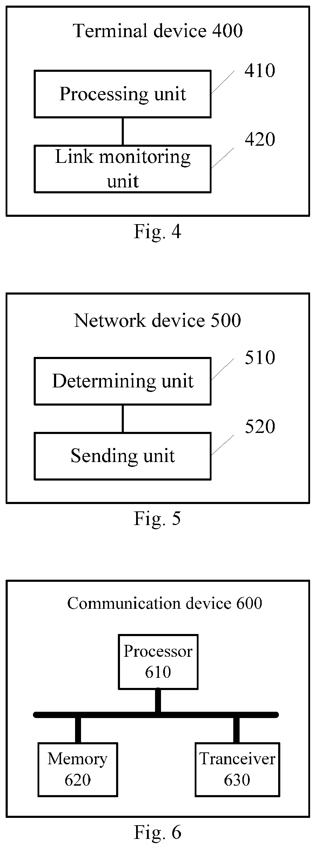

The communication method according to the embodiments of the present application is described in detail above, and the apparatus according to the embodiments of the present application will be described below with reference to Fig. 4 to Fig. 7. The technical features described in the method embodiment are applicable to the following apparatus embodiments.

Fig. 4 is a schematic block diagram of a terminal device 400 according to an embodiment of the present application. As shown in Fig. 4, the terminal device 400 includes a processing unit 410 and a link monitoring unit 420.

The processing unit 410 is configured to select a target RLM parameter set in the first RLM parameter set and the second RLM parameter set based on the channel quality of the terminal device.

The link monitoring unit 420 is configured to perform the RLM according to the target RLM parameter set selected by the processing unit.

Therefore, the terminal device can select the target RLM parameter set for radio link monitoring in different RLM parameter sets based on its channel quality, and then perform radio link monitoring based on individual parameters in the target RLM parameter set, thereby improving the accuracy of the RLM measurement on the licensed frequency band.

Optionally, the first RLM parameter set and the second RLM parameter set include at least one of the following parameters, and at least one of the parameters included in the first RLM parameter set is different from the parameters included in the second RLM parameter set: an evaluation period of RLM, a synchronization threshold Qin used to determine whether to report an in sync (IS) indication, an out-of-synchronization threshold Qout used to determine whether to report an out of sync (OOS) indication, a counter N310 for recording a number of the OOS indications that are continuously reported to determine whether to start a timer T310, and a counter N311 for recording a number of the IS indications that are continuously reported to determine whether to stop the timer T310 before the timer T310 expires.

Optionally, the processing unit 410 is specifically configured to: if the measured value of the channel quality of the terminal device is greater than or equal to the first threshold, select the first RLM parameter set as the target RLM parameter set; and/or, if the measured value of the channel quality of the terminal device is less than or equal to the first threshold, select the second RLM parameter set as the target RLM parameter set.

Optionally, the set value of the counter N310 in the first RLM parameter set is greater than the set value of the counter N310 in the second RLM parameter set; and/or the set value of the counter N311 in the first RLM parameter set is less than the set value of the counter N311 in the second RLM parameter set; and/or the duration of the timer T310 in the first RLM parameter set is greater than the duration of the timer T310 in the first RLM parameter set.

Optionally, the measurement value of the channel quality of the terminal device includes any one of the following: reference signal received power (RSRP), reference signal received quality (RSRQ), reference signal signal to interference plus noise ratio (RS-SINR).

Optionally, the measured value of the channel quality of the terminal device includes an average value of multiple measured values of the channel quality of the terminal device obtained by the terminal device within a predetermined period of time.

Optionally, the terminal device further includes an obtaining unit configured to obtain configuration information, where the configuration information includes at least one of the first threshold, the first RLM parameter set, and the second RLM parameter set.

Optionally, the terminal device further includes a receiving unit, and the obtaining unit is specifically configured to: receive the configuration information sent by the network device through the receiving unit; or, obtain the configuration information pre-stored in the terminal device.

Optionally, the terminal device further includes a sending unit configured to: if the measured value of the SINR is greater than the synchronization threshold Qin, report the IS indication; and if the measured value of the SINR is less than the out-of-synchronization threshold Qout, report the OOS indication.

Optionally, the link monitoring unit 420 is further configured to: if the higher layer of the terminal device continuously receives N310 OOS indications from the physical layer of the terminal device, start the timer T310; if the number of IS indications continuously received by the higher layer of the terminal device from the physical layer of the terminal device before the timer T310 expires reaches the set value of the timer N311, and the higher layer of the terminal device stops the timer T310, stop the timer T310; and if the number of IS indications continuously received by the higher layer of the terminal device from the physical layer of the terminal device before the timer T310 expires does not reach the set value of the timer N311, determine that the radio link fails (RLF).

It should be understood that the terminal device 400 can perform the corresponding operations performed by the terminal device in the foregoing method 200, and for the sake of brevity, details are not described herein again.

Fig. 5 is a schematic block diagram of a network device 500 according to an embodiment of the present application. As shown in Fig. 5, the network device 500 includes a determining unit 510 and a sending unit 520.

The determining unit 510 is configured to determine configuration information, where the configuration information includes a first RLM parameter set and a second RLM parameter set, and the first RLM parameter set and the second RLM parameter set are used by the terminal device for selecting a target RLM parameter set used for performing the RLM according to the channel quality of the terminal device.

The sending unit 520 is configured to send the configuration information determined by the determining unit 510 to a terminal device.

Therefore, the network device configures different RLM parameter sets for the terminal devices, so that the terminal device can select the target RLM parameter set for radio link monitoring from different RLM parameter sets based on its channel quality, and then perform radio link monitoring based on individual parameters in the target RLM parameter set, thereby improving the accuracy of RLM measurement on the unlicensed frequency band.

Optionally, the configuration information further includes a first threshold, and the first threshold is used by the terminal device to select the target RLM parameter set in the first RLM parameter set and the second RLM parameter set.

Optionally, at least one of the following parameters in the first RLM parameter set and the second RLM parameter set is different: an evaluation period of RLM, a synchronization threshold Qin used to determine whether to report an in sync (IS) indication, an out-of-synchronization threshold Qout used to determine whether to report an out of sync (OOS) indication, a counter N310 for recording a number of the OOS indications that are continuously reported to determine whether to start a timer T310, and a counter N311 for recording a number of the IS indications that are continuously reported to determine whether to stop the timer T310 before the timer T310 expires.

It should be understood that the communication device 500 can perform the corresponding operations performed by the network device in the above method 300, and for the sake of brevity, details are not described herein again.

Fig. 6 is a schematic structural diagram of a communication device 600 provided by an embodiment of the present application. The communication device 600 shown in Fig. 6 includes a processor 610, and the processor 610 can call and run a computer program from a memory to implement the method in the embodiments of the present application.

Optionally, as shown in Fig. 6, the communication device 600 may further include a memory 620. The processor 610 can call and run a computer program from the memory 620 to implement the method in the embodiments of the present application.

The memory 620 may be a separate device independent of the processor 610, or may be integrated in the processor 610.

Optionally, as shown in Fig. 6, the communication device 600 may further include a transceiver 630, and the processor 610 may control the transceiver 630 to communicate with other devices. Specifically, it may send information or data to other devices, or receive information or data sent by other device.

The transceiver 630 may include a transmitter and a receiver. The transceiver 630 may further include an antenna, and the number of antennas may be one or more.

Optionally, the communication device 600 may specifically be the terminal device of the embodiment of the present application, and the communication device 600 may implement the corresponding process implemented by the terminal device in each method of the embodiment of the present application. For brevity, details are not repeated here.

Optionally, the communication device 600 may specifically be the network device in the embodiment of the present application, and the communication device 600 may implement the corresponding process implemented by the network device in each method of the embodiment of the present application. For the sake of brevity, details are not repeated here.

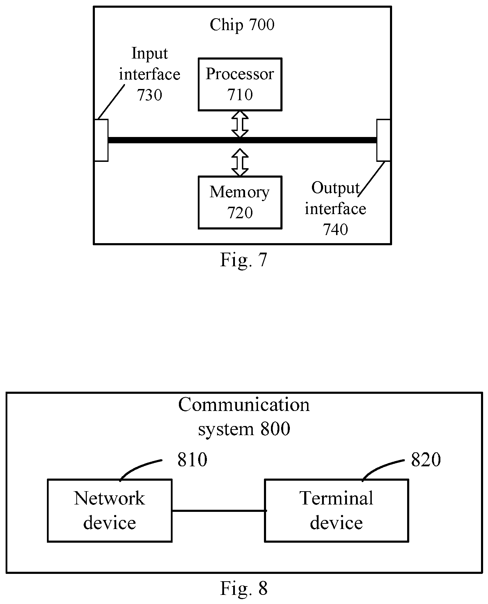

Fig. 7 is a schematic structural diagram of a chip of an embodiment of the present application. The chip 700 shown in Fig. 7 includes a processor 710, and the processor 710 can call and run a computer program from the memory to implement the method in the embodiment of the present application.

Optionally, as shown in Fig. 7, the chip 700 may further include a memory 720. The processor 710 may call and run a computer program from the memory 720 to implement the method in the embodiment of the present application.

The memory 720 may be a separate device independent of the processor 710, or may be integrated in the processor 710.

Optionally, the chip 700 may further include an input interface 730. The processor 710 can control the input interface 730 to communicate with other devices or chips, and specifically, can obtain information or data sent by other devices or chips.

Optionally, the chip 700 may further include an output interface 740. The processor 710 can control the output interface 740 to communicate with other devices or chips, and specifically, can output information or data to other devices or chips.

Optionally, the chip can be applied to the terminal device in the embodiment of the present application, and the chip can implement the corresponding process implemented by the terminal device in each method of the embodiment of the present application. For brevity, details are not described herein again.

Optionally, the chip can be applied to the network device in the embodiment of the present application, and the chip can implement the corresponding process implemented by the network device in each method of the embodiment of the present application. For the sake of brevity, details are not described herein again.

It should be understood that the chips mentioned in the embodiments of the present application may also be referred to as system-level chips, system chips, chip systems, or system-on-chips.

It should be understood that the processor of the embodiment of the present application may be an integrated circuit chip with signal processing capability. In the implementation process, the steps of the foregoing method embodiments can be completed by hardware integrated logic circuits in the processor or instructions in the form of software. The aforementioned processor may be a general-purpose processor, a Digital Signal Processor (DSP), an Application Specific Integrated Circuit (ASIC), a Field Programmable Gate Array (FPGA) or other programmable logic devices, discrete gates or transistor logic devices, discrete hardware components. The methods, steps, and logical block diagrams disclosed in the embodiments of the present application can be implemented or executed. The general-purpose processor may be a microprocessor or the processor may also be any conventional processor or the like. The steps of the method disclosed in combination with the embodiments of the present application may be directly embodied as being executed and completed by a hardware decoding processor, or executed by a combination of hardware and software modules in the decoding processor. The software module may be located in a mature storage medium in the field such as a random access memory, a flash memory, a read-only memory, a programmable read-only memory, or an electrically erasable programmable memory, and a register. The storage medium is located in the memory, and the processor reads the information in the memory and completes the steps of the above method in combination with its hardware.

It can be understood that the memory in the embodiments of the present application may be a volatile memory or a non-volatile memory, or may include both volatile and non-volatile memories. The non-volatile memory may be a Read-Only Memory (ROM), a Programmable ROM (PROM), an Erasable PROM (EPROM), and an Electrically EPROM (EEPROM) or a flash memory. The volatile memory may be a Random Access Memory (RAM), which is used as an external cache. By way of exemplary but not restrictive description, many forms of RAM are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memories of the systems and methods described herein are intended to include, but are not limited to, these and any other suitable types of memories.

It should be understood that the foregoing memories are exemplary but not restrictive. For example, the memory in the embodiment of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a Direct Rambus RAM (DR RAM), etc. That is to say, the memories in the embodiments of the present application are intended to include but not limited to these and any other suitable types of memory.

Fig. 8 is a schematic block diagram of a communication system 800 according to an embodiment of the present application. As shown in Fig. 8, the communication system 800 includes a network device 810 and a terminal device 820.

The network device 810 is configured to determine configuration information, the configuration information includes a first RLM parameter set and a second RLM parameter set, and the first RLM parameter set and the second RLM parameter set are used for the terminal device to select a target RLM parameter set for radio link monitoring; and send the configuration information to the terminal device.

The terminal device 820 is configured to: based on the channel quality of the terminal device, select a target RLM parameter set in the first RLM parameter set and the second RLM parameter set; and perform radio link monitoring according to the target RLM parameter set.

The network device 810 may be used to implement the corresponding functions implemented by the network device in the above method 300, and the composition of the network device 810 may be as shown in the network device 500 in Fig. 5. For the sake of brevity, details are not repeated here.

The terminal device 820 may be used to implement the corresponding functions implemented by the terminal device in the above method 200, and the composition of the terminal device 820 may be as shown in the terminal device 400 in Fig. 4. For the sake of brevity, details are not repeated here.

The embodiments of the present application also provide a computer-readable storage medium for storing computer programs. Optionally, the computer-readable storage medium may be applied to the network device in the embodiment of the present application, and the computer program causes the computer to execute the corresponding process implemented by the network device in each method of the embodiment of the present application. For the sake of brevity, details are not repeated here. Optionally, the computer-readable storage medium may be applied to the terminal device in the embodiment of the present application, and the computer program causes the computer to execute the corresponding process implemented by the terminal device in each method of the embodiment of the present application. For the sake of brevity, details are not repeated here.

The embodiments of the present application also provide a computer program product, including computer program instructions. Optionally, the computer program product may be applied to the network device in the embodiment of the present application, and the computer program instructions cause the computer to execute the corresponding process implemented by the network device in each method of the embodiment of the present application. For the sake of brevity, details are not repeated here. Optionally, the computer program product may be applied to the terminal device in the embodiment of the present application, and the computer program instructions cause the computer to execute the corresponding process implemented by the terminal device in each method of the embodiment of the present application. For the sake of brevity, details are not repeated here.

The embodiment of the application also provides a computer program. Optionally, the computer program may be applied to the network device in the embodiment of the present application. When the computer program is run on the computer, the computer is caused to execute the corresponding process implemented by the network device in each method of the embodiment of the present application. For the sake of brevity, details are not repeated here. Optionally, the computer program may be applied to the terminal device in the embodiment of the present application. When the computer program runs on the computer, it causes the computer to execute the corresponding process implemented by the terminal device in each method of the embodiment of the present application. For the sake of brevity, details are not repeated here.

It should be understood that the terms "system" and "network" in the present disclosure are often used interchangeably. The term "and/or" in the present disclosure is only used to describe an association relationship between the associated objects, which means that there may be three relationships. For example, A and/or B may mean the following three situations: A exists alone, A and B exist at the same time, and B exist alone. In addition, the character "/" in the present disclosure generally indicates that the associated objects are in an "or" relationship.

It should also be understood that in the embodiments of the present disclosure, "B corresponding to A" means that B is associated with A, and B can be determined according to A. However, it should also be understood that determining B according to A does not mean that B is determined only according to A, and B can also be determined according to A and/or other information.

A person of ordinary skill in the art may be aware that the units and algorithm steps of the examples described in combination with the embodiments disclosed herein can be implemented by electronic hardware or a combination of computer software and electronic hardware. Whether these functions are performed by hardware or software depends on the specific application and design constraint conditions of the technical solution. Professionals and technicians can use different methods for each specific application to implement the described functions, but such implementation should not be considered beyond the scope of this application.

Those skilled in the art can clearly understand that, for the convenience and conciseness of description, the specific working process of the above-described system, apparatus, and unit can refer to the corresponding process in the foregoing method embodiment, which is not repeated here.

In the several embodiments provided in this application, it should be understood that the disclosed system, apparatus, and method may be implemented in other ways. For example, the apparatus embodiment described above is only illustrative. For example, the division of the unit is only a logical function division. In actual implementation, there may be other division methods. For example, multiple units or components may be combined or may be integrated into another system, or some features may be ignored or not implemented. In addition, the displayed or discussed mutual coupling or direct coupling or communication connection may be indirect coupling or communication connection through some interfaces, apparatuses or units, and may be in electrical, mechanical or other forms.

The units described as separate components may or may not be physically separated, and the components displayed as units may or may not be physical units, that is, they may be located in one place, or they may be distributed on multiple network units. Some or all of the units may be selected according to actual needs to achieve the objectives of the solutions of the embodiments.

In addition, the functional units in the various embodiments of the present application may be integrated into one processing unit, or each unit may exist alone physically, or two or more units may be integrated into one unit.

When the functions are implemented in the form of a software functional unit and sold or used as an independent product, the functions may be stored in a computer-readable storage medium. Based on such an understanding, the technical solutions of the present application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present application. The foregoing storage medium includes: any medium that can store program code, such as a USB flash drive, a removable hard disk, a read-only memory (ROM), a random access memory (RAM), a magnetic disk, or an optical disc.

Described above are merely specific implementations of the present application, but the protection scope of the present application is not limited thereto. Changes or replacements readily figured out by any person skilled in the art within the technical scope disclosed in the present application shall be covered by the protection scope of the present application. Therefore, the protection scope of the present application shall be subject to the protection scope of the claims.

## Claims

1. A method for Radio Link Monitoring (RLM), comprising:
selecting, by a terminal device, a target RLM parameter set from a first RLM parameter set and a second RLM parameter set based on a channel quality of the terminal device; and
performing, by the terminal device, the RLM according to the target RLM parameter set.

2. The method according to claim 1, wherein the first RLM parameter set and the second RLM parameter set comprise at least one of following parameters:
an evaluation period of RLM, a synchronization threshold Qin used to determine whether to report an in sync (IS) indication, an out-of-synchronization threshold Qout used to determine whether to report an out of sync (OOS) indication, a counter N310 for recording a number of the OOS indications that are continuously reported to determine whether to start a timer T310, and a counter N311 for recording a number of the IS indications that are continuously reported to determine whether to stop the timer T310 before the timer T310 expires;
wherein at least one of the parameters comprised in the first RLM parameter set is different from the parameters comprised in the second RLM parameter set.

3. The method according to claim 1 or 2, wherein the selecting, by terminal device, the target RLM parameter set from the first RLM parameter set and the second RLM parameter set according to the channel quality of the terminal device, comprises:
when a measured value of the channel quality of the terminal device is greater than or equal to a first threshold, selecting, by the terminal device, the first RLM parameter set as the target RLM parameter set; and/or,
when the measured value of the channel quality of the terminal device is less than or equal to the first threshold, selecting, by the terminal device, the second RLM parameter set as the target RLM parameter set.

4. The method according to claim 3, wherein
a set value of the counter N310 in the first RLM parameter set is greater than a set value of the counter N310 in the second RLM parameter set; and/or,
a set value of the counter N311 in the first RLM parameter set is smaller than a set value of the counter N311 in the second RLM parameter set; and/or,
a duration of the timer T310 in the first RLM parameter set is greater than a duration of the timer T310 in the first RLM parameter set.

5. The method according to claim 3 or 4, wherein the measured value of the channel quality of the terminal device comprises any one of:
a Reference Signal Receiving Power (RSRP), a Reference Signal Received Quality (RSRQ), and a Reference Signal Signal to Interference plus Noise Ratio (RS-SINR).

6. The method according to any one of claims 3 to 5, wherein the measured value of the channel quality of the terminal device is an average value of a plurality of measured values of the channel quality of the terminal device measured by the terminal device within a predetermined period of time.

7. The method according to any one of claims 1 to 6, further comprising:
obtaining, by the terminal device, configuration information, wherein the configuration information comprises at least one of a first threshold, the first RLM parameter set, and the second RLM parameter set.

8. The method according to claim 7, wherein the obtaining, by the terminal device, the configuration information comprises:
receiving, by the terminal device, the configuration information sent by the network device; or,
obtaining, by the terminal device, the configuration information pre-stored in the terminal device.

9. The method according to any one of claims 1 to 8, wherein the performing, by the terminal device, the RLM according to the target RLM parameter set comprises:
performing, by the terminal device, SINR measurement;
when a measured value of the SINR is greater than the synchronization threshold Qin, reporting, by a physical layer of the terminal device, the IS indication to a higher layer of the terminal device; and
when the measured value of the SINR is less than the out-of-synchronization threshold Qout, reporting, by the physical layer of the terminal device, the OOS indication to the higher layer of the terminal device.

10. The method according to any one of claims 1 to 9, wherein the performing, by the terminal device, the RLM according to the target RLM parameter set further comprises:
when a number of the OOS indications continuously received by a higher layer of the terminal device from a physical layer of the terminal device reaches a set value of the timer N310, starting, by the higher layer of the terminal device, the timer T310;
when a number of the IS indications continuously received by the higher layer of the terminal device from the physical layer of the terminal device before the timer T310 expires reaches a set value of the timer N311, stopping, by the higher layer of the terminal device, the timer T310; and
when the number of the IS indications continuously received by the higher layer of the terminal device from the physical layer of the terminal device before the timer T310 expires does not reach the set value of the timer N311, determining, by the terminal device, Radio Link Failure (RLF).

11. A method for Radio Link Monitoring (RLM), comprising:
determining, by a network device, configuration information, wherein the configuration information comprises a first RLM parameter set and a second RLM parameter set, and the first RLM parameter set and the second RLM parameter set are used by a terminal device for selecting a target RLM parameter set used for performing the RLM according to a channel quality of the terminal device; and
sending, by the network device, the configuration information to the terminal device.

12. The method according to claim 11, wherein the first RLM parameter set and the second RLM parameter set comprise at least one of following parameters:
an evaluation period of RLM, a synchronization threshold Qin used to determine whether to report an in sync (IS) indication, an out-of-synchronization threshold Qout used to determine whether to report an out of sync (OOS) indication, a counter N310 for recording a number of the OOS indications that are continuously reported to determine whether to start a timer T310, and a counter N311 for recording a number of the IS indications that are continuously reported to determine whether to stop the timer T310 before the timer T310 expires;
wherein at least one of the parameters comprised in the first RLM parameter set is different from the parameters comprised in the second RLM parameter set.

13. The method according to claim 11 or 12, wherein the configuration information further comprises a first threshold, and the first threshold is used by the terminal device to select the first RLM parameter set as the target parameter set when a measured value of the channel quality of the terminal device is greater than the first threshold, and/or select the first RLM parameter set as the target parameter set when the measured value of the channel quality of the terminal device is less than or equal to the first threshold.

14. The method according to claim 13, wherein
a set value of the counter N310 in the first RLM parameter set is greater than a set value of the counter N310 in the second RLM parameter set; and/or,
a set value of the counter N311 in the first RLM parameter set is smaller than a set value of the counter N311 in the second RLM parameter set; and/or,
a duration of the timer T310 in the first RLM parameter set is greater than a duration of the timer T310 in the first RLM parameter set.

15. A terminal device, comprising:
a processing unit, configured to select a target RLM parameter set from a first RLM parameter set and a second RLM parameter set based on a channel quality of the terminal device; and
a link monitoring unit, configured to perform the RLM according to the target RLM parameter set selected by the processing unit.

16. The terminal device according to claim 15, wherein the first RLM parameter set and the second RLM parameter set comprise at least one of following parameters:
an evaluation period of RLM, a synchronization threshold Qin used to determine whether to report an in sync (IS) indication, an out-of-synchronization threshold Qout used to determine whether to report an out of sync (OOS) indication, a counter N310 for recording a number of the OOS indications that are continuously reported to determine whether to start a timer T310, and a counter N311 for recording a number of the IS indications that are continuously reported to determine whether to stop the timer T310 before the timer T310 expires;
wherein at least one of the parameters comprised in the first RLM parameter set is different from the parameters comprised in the second RLM parameter set.

17. The terminal device according to claim 15 or 16, wherein the processing unit is specifically configured to:
when a measured value of the channel quality of the terminal device is greater than or equal to a first threshold, selecting, by the terminal device, the first RLM parameter set as the target RLM parameter set; and/or,
when the measured value of the channel quality of the terminal device is less than or equal to the first threshold, selecting, by the terminal device, the second RLM parameter set as the target RLM parameter set.

18. The terminal device according to claim 17, wherein
a set value of the counter N310 in the first RLM parameter set is greater than a set value of the counter N310 in the second RLM parameter set; and/or,
a set value of the counter N311 in the first RLM parameter set is smaller than a set value of the counter N311 in the second RLM parameter set; and/or,
a duration of the timer T310 in the first RLM parameter set is greater than a duration of the timer T310 in the first RLM parameter set.

19. The terminal device according to claim 17 or 18, wherein the measured value of the channel quality of the terminal device comprises any one of:
a Reference Signal Receiving Power (RSRP), a Reference Signal Received Quality (RSRQ), and a Reference Signal Signal to Interference plus Noise Ratio (RS-SINR).

20. The terminal device according to any one of claims 17 to 19, wherein the measured value of the channel quality of the terminal device is an average value of a plurality of measured values of the channel quality of the terminal device measured by the terminal device within a predetermined period of time.

21. The terminal device according to any one of claims 15 to 20, wherein the terminal device further comprises an obtaining unit, and the obtaining unit is configured to:
obtain configuration information, wherein the configuration information comprises at least one of a first threshold, the first RLM parameter set, and the second RLM parameter set.

22. The terminal device according to claim 21, wherein the terminal device further comprises a receiving unit, and the obtaining unit is specifically configured to:
receive the configuration information sent by the network device through the receiving unit; or,
obtain the configuration information pre-stored in the terminal device.

23. The terminal device according to any one of claims 15 to 22, wherein the terminal device further comprises a sending unit, and the sending unit is configured to:
when a measured value of the SINR is greater than the synchronization threshold Qin, report the IS indication; and
when the measured value of the SINR is less than the out-of-synchronization threshold Qout, report the OOS indication.

24. The terminal device according to any one of claims 15 to 23, wherein the link monitoring unit is further configured to:
when a higher layer of the terminal device continuously receives N310 OOS indications from a physical layer of the terminal device, start the timer T310;
when a number of the IS indications continuously received by the higher layer of the terminal device from the physical layer of the terminal device before the timer T310 expires reaches a set value of the timer N311, and the higher layer of the terminal device stops the timer T310, stop the time T310; and
when the number of the IS indications continuously received by the higher layer of the terminal device from the physical layer of the terminal device before the timer T310 expires does not reach the set value of the timer N311, determine Radio Link Failure (RLF).

25. A network device, comprising:
a determining unit, configured to determine configuration information, wherein the configuration information comprises a first RLM parameter set and a second RLM parameter set, and the first RLM parameter set and the second RLM parameter set are used by a terminal device for selecting a target RLM parameter set used for performing the RLM according to a channel quality of the terminal device; and
a sending unit, configured to send the configuration information determined by the determining unit to the terminal device.

26. The network device according to claim 25, wherein the first RLM parameter set and the second RLM parameter set comprise at least one of following parameters:
an evaluation period of RLM, a synchronization threshold Qin used to determine whether to report an in sync (IS) indication, an out-of-synchronization threshold Qout used to determine whether to report an out of sync (OOS) indication, a counter N310 for recording a number of the OOS indications that are continuously reported to determine whether to start a timer T310, and a counter N311 for recording a number of the IS indications that are continuously reported to determine whether to stop the timer T310 before the timer T310 expires;
wherein at least one of the parameters comprised in the first RLM parameter set is different from the parameters comprised in the second RLM parameter set.

27. The network device according to claim 25 or 26, wherein the configuration information further comprises a first threshold, and the first threshold is used by the terminal device to select the first RLM parameter set as the target parameter set when a measured value of the channel quality of the terminal device is greater than the first threshold, and/or select the first RLM parameter set as the target parameter set when the measured value of the channel quality of the terminal device is less than or equal to the first threshold.

28. The network device according to claim 27, wherein
a set value of the counter N310 in the first RLM parameter set is greater than a set value of the counter N310 in the second RLM parameter set; and/or,
a set value of the counter N311 in the first RLM parameter set is smaller than a set value of the counter N311 in the second RLM parameter set; and/or,
a duration of the timer T310 in the first RLM parameter set is greater than a duration of the timer T310 in the first RLM parameter set.

29. A terminal device, wherein the terminal device comprises a processor and a memory, the memory is configured to store a computer program, and the processor is configured to call and run the computer program stored in the memory to execute the method according to any one of claims 1 to 10.

30. A network device, wherein the network device comprises a processor and a memory, the memory is configured to store a computer program, and the processor is configured to call and run the computer program stored in the memory to execute the method according to any one of claims 11 to 14.

31. A chip, wherein the chip comprises a processor, and the processor is configured to call and run a computer program from a memory, so that a device installed with the chip executes the method according to any one of claims 1 to 11.

32. A chip, wherein the chip comprises a processor, and the processor is configured to call and run a computer program from a memory, so that a device installed with the chip executes the method according to claim 12 or 13.

33. A computer-readable storage medium, wherein the computer-readable storage medium is configured to store a computer program that enables a computer to execute the method according to any one of claims 1 to 10.

34. A computer-readable storage medium, wherein the computer-readable storage medium is configured to store a computer program that enables a computer to execute the method according to any one of claims 11 to 14.

35. A computer program product, comprising computer program instructions that cause a computer to execute the method according to any one of claims 1 to 10.

36. A computer program product, comprising computer program instructions that cause a computer to execute the method according to any one of claims 11 to 14.

37. A computer program, wherein the computer program causes a computer to execute the method according to any one of claims 1 to 10.

38. A computer program, wherein the computer program causes a computer to execute the method according to any one of claims 11 to 14.
